# EUROPÄISCHE PATENTSCHRIFT

(11) **EP 2 237 119 B1**
(45) Veröffentlichungstag und Bekanntmachung des Hinweises auf die Patenterteilung: **30.12.2020**
(21) Anmeldenummer: 10003313.3
(22) Anmeldetag: 27.03.2010
(51) Int. Cl.: G05B 19/042

(54) **Verfahren zum Prüfen der Funktion eines Fahrerassistenzsystems eines Kraftfahrzeugs und Kraftfahrzeug**
Method for testing the function of a driver assistance system for a motor vehicle and motor vehicle
Procédé de vérification du fonctionnement d'un système d'assistance au conducteur d'un véhicule automobile et véhicule automobile

(30) Priorität: 03.04.2009 DE 102009016243
(43) Veröffentlichungstag der Anmeldung: 06.10.2010
(73) Patentinhaber: Audi AG, 85049 Ingolstadt (DE)
(72) Erfinder: Riedel, Helmut Dr., 86697 Oberhausen (DE)
(74) Vertreter: Thielmann, Frank

(56) Entgegenhaltungen:
- WO-A2-2008/058293
- DE-A1- 10 254 388
- DE-A1-102004 057 947
- DE-A1-102007 035 474
- US-A1- 2003 154 009
- US-A1- 2004 225 557
- US-A1- 2008 147 267

## Beschreibung

Die Erfindung betrifft ein Verfahren zum Prüfen der Funktion eines Fahrerassistenzsystems eines Kraftfahrzeugs in einer Kollisionssituation oder in einer kollisionsnahen Situation. Die Erfindung bezieht sich außerdem auf ein Kraftfahrzeug mit einem solchen Fahrerassistenzsystem.

Die Erfindung macht bevorzugt von einer Vorrichtung Gebrauch, wie sie in der Druckschrift DE 10 2007 035 474 A1 beschrieben ist. Diese Vorrichtung ermöglicht das Schaffen von Situationen, in denen eine Kollision zwischen einem Kraftfahrzeug und einem Prüfkörper bevorsteht oder eintritt. Der Prüfkörper wird an einem Schienenpaar bewegt, das sich über einer Straße - die auf einem für den öffentlichen Straßenverkehr nicht zugänglichen Versuchsfeld bereitgestellt ist - erstreckt und durch zwei an einander gegenüberliegenden Seiten der Straße liegende Träger gehalten ist. Der Prüfkörper kann somit in eine Fahrbahn des Kraftfahrzeugs eingebracht und aus dieser wieder herausbewegt werden. Die Bewegung des Prüfkörpers erfolgt mit Hilfe einer Steuereinrichtung, die auch Informationen über die jeweils augenblickliche Position des Prüfkörpers und auch des Kraftfahrzeugs erfasst.

In solchen Kollisionssituationen oder kollisionsnahen Situationen können insbesondere diejenigen Fahrerassistenzsysteme geprüft werden, die Situationsdaten über die Umgebung des Kraftfahrzeugs gewinnen und aufgrund dieser Situationsdaten in unterschiedliche Funktionen des Kraftfahrzeugs eingreifen, z.B. ein Bremssystem betätigen oder einen Airbag auslösen. Es können in den Kollisionssituationen oder kollisionsnahen Situationen also die bestimmungsgemäßen Reaktionen eines Fahrerassistenzsystems geprüft werden. Eine solche Reaktion des Fahrerassistenzsystems setzt voraus, dass die Situationsdaten über die Umgebung des Kraftfahrzeugs vom Fahrerassistenzsystem mit einer hohen Genauigkeit gewonnen werden. Die Situationsdaten müssen demnach ausgewertet bzw. mit Referenzdaten verglichen werden.

Eine besondere Lösung muss gefunden werden, um dieses Vergleichen der Situationsdaten mit Referenzinformationen ohne viel Aufwand zu ermöglichen. Bisher wurde die Referenzinformation erst nachträglich aus von der Steuereinrichtung des Prüfkörpers aufgezeichneten Daten gewonnen. Eine große Herausforderung besteht also darin, das Prüfen von Fahrerassistenzsystemen dahingehend zu verbessern, dass der Datenverarbeitungs- und Synchronisationsaufwand auf ein Minimum reduziert wird.

Die Druckschrift DE 102 54 388 A1 beschreibt ein Verfahren zum Prüfen der Funktion einer automatischen Notbremseeinrichtung eines Fahrzeugs. Die Notbremseeinrichtung umfasst einen Sensor, eine Auswerteeinheit und eine elektrisch ansteuerbare Bremse. Während der Überprüfung der Notbremseeinrichtung wird eine Messeinrichtung eingesetzt, die die Bremskraft der Bremse misst. Ein externes Steuergerät schreibt von außen Messdaten in die Auswerteeinheit ein, nachdem die Auswerteeinheit zunächst in einen Test-Modus umgeschaltet wurde. Es wird in die Auswerteeinheit insbesondere ein Wert für eine Relativgeschwindigkeit des Fahrzeugs bezüglich eines Objektes eingeschrieben. Bei einem nachfolgenden Test greift die Auswerteeinheit auf diesen Wert zurück und muss diesen Wert nicht mehr aus den Messdaten des Sensors ermitteln. Zu dem Wert für die Relativgeschwindigkeit existiert ein kritischer Abstand, bei dem eine Kollision des Fahrzeugs mit dem Objekt unvermeidlich ist. Wird nun das Objekt in Richtung auf das Fahrzeug zu bewegt, so soll die Bremse bei Erreichen des kritischen Abstands angesteuert werden. Die Messeinrichtung erfasst nun die Bremskraft der Bremse.

Die WO 2008/058293 A2, US 2003/0154009, US 2008/0147267 A1 und US2004/0225557 A1 offenbaren jeweils Verfahren zum Aufnehmen Ereignissen und/oder Daten in einem Kraftfahrzeug.

Es ist Aufgabe der Erfindung, ein Verfahren sowie ein Kraftfahrzeug der eingangs genannten Gattung zu schaffen, bei denen Maßnahmen getroffen sind, die eine Prüfung der Funktion eines Fahrerassistenzsystems ohne viel Aufwand ermöglichen.

Diese Aufgabe wird erfindungsgemäß durch ein Verfahren, welches die Merkmale des Patentanspruchs 1 aufweist, sowie durch ein Kraftfahrzeug mit den Merkmalen gemäß Patentanspruch 10 gelöst.

Erfindungsgemäß werden demnach ein Prüfkörper sowie eine Vorrichtung zum Bewegen des Prüfkörpers bereitgestellt. Es werden einen Zustand des Prüfkörpers beschreibende Referenzdaten durch eine Steuereinrichtung dieser Vorrichtung erfasst. Es wird eine Situation herbeigeführt, in welcher eine Kollision des Kraftfahrzeugs und des Prüfkörpers bevorsteht oder eintritt. Während des Herbeiführens dieser Kollisionssituation oder kollisionsnahen Situation werden Situationsdaten durch das Fahrerassistenzsystem gewonnen. Die Referenzdaten und die Situationsdaten werden gleichzeitig in derselben Speichereinrichtung bereitgestellt.

Also wird der erfindungsgemäße Effekt dadurch erzielt, dass sowohl die Referenzdaten der Steuereinrichtung als auch die von dem zu prüfenden Fahrerassistenzsystem aufgenommenen Situationsdaten während der Prüfung gleichzeitig in der selben Speichereinrichtung abgelegt werden. Neben den auszuwertenden Situationsdaten des Fahrerassistenzsystems stehen somit auch die Referenzdaten in der Speichereinrichtung zur Verfügung, so dass ein Auswerten der Situationsdaten ohne viel Aufwand und auch während der Prüfung des Fahrerassistenzsystems ermöglicht wird. Ein wesentlicher Vorteil des erfindungsgemäßen Verfahrens ist also die Verfügbarkeit sämtlicher versuchsrelevanter Daten an einer zentralen Stelle. So können in der Speichereinrichtung sowohl die Daten eines aktuellen als auch die eines bereits abgeschlossenen Versuchsablaufs abgelegt werden, und diese Daten und somit auch die Versuchsabläufe können dann miteinander verglichen werden.

Besonders bevorzugt erfolgt das Bereitstellen der Referenzdaten und der Situationsdaten auf eine solche Art und Weise, dass ein Teil der Referenzdaten einem Teil der Situationsdaten zeitlich zugeordnet werden kann. Dann erübrigt sich nach der Beendigung des Prüfablaufs die zeitliche Zuordnung der Situationsdaten zu den Referenzdaten mit dem damit verbundenen Datenverarbeitungs- und Synchronisationsaufwand, und es kann Zeit bei der Auswertung der Situationsdaten gespart werde.

Die in derselben Speichereinrichtung abgelegten Situationsdaten und Referenzdaten können ohne viel Aufwand nach Beendigung eines Versuchsablaufs ausgewertet werden. Das Bereitstellen der Referenzdaten und der Situationsdaten gleichzeitig in derselben Speichereinrichtung ermöglicht jedoch, dass die Situationsdaten auch schon während des Herbeiführens der Kollisionssituation oder der kollisionsnahen Situation mit den Referenzdaten verglichen und ausgewertet werden können. Dies kann z. B. automatisch mit Hilfe einer Recheneinrichtung erfolgen. Eine solche Recheneinrichtung kann die Situationsdaten und die Referenzdaten aus der Speichereinrichtung auslesen, verarbeiten und auswerten. Dann erübrigt sich eine Auswertung der Daten nach Beendigung eines Prüfablaufs.

In einer Ausführungsform werden die Referenzdaten und/oder die Situationsdaten drahtlos übertragen. Bei dieser Ausführungsform hat sich als besonders vorteilhaft herausgestellt, wenn ein Kommunikationsstandard der IEEE-802.11-Familie (auch unter der Bezeichnung "Wireless Local Area Network" bekannt) verwendet wird. Ein solcher Kommunikationsstandard gewährleistet nämlich - insbesondere wenn das OFDM-Verfahren ("Orthogonal Frequency Division Multiplexing") verwendet wird - eine hohe Datenübertragungsrate sowie eine große Robustheit der Datenübertragung gegenüber externen Kanaleinflüssen, es kann somit eine geringe Bitfehlerrate gewährleistet werden. Darüber hinaus können bereits auf dem Markt verfügbare Geräte, nämlich insbesondere Sender und Empfänger, genutzt werden.

Bei der Ausführungsform mit der drahtlosen Übertragung der Situationsdaten und/oder der Referenzdaten sind unterschiedliche Ausführungsformen vorgesehen:
Die Speichereinrichtung kann in das Kraftfahrzeug integriert sein, dann werden die Referenzdaten von der Steuereinrichtung an das Kraftfahrzeug gesandt. Die Speichereinrichtung kann bei dieser Ausführungsform direkt in dem Fahrerassistenzsystem oder auch in einer separaten Recheneinrichtung integriert sein. Ist die Speichereinrichtung in einer separaten Recheneinrichtung im Kraftfahrzeug angeordnet, so werden die Situationsdaten von dem Fahrerassistenzsystem bevorzugt über einen Kommunikationsbus des Kraftfahrzeugs an die Recheneinrichtung übertragen. Ein im Kraftfahrzeug bereits verfügbarer Kommunikationsbus kann also zum Übertragen der Situationsdaten genutzt werden. Bei dieser Ausführungsform kann ein Empfänger im Kraftfahrzeug vorgesehen sein, welcher Signale mit den Referenzdaten von der Steuereinrichtung der Vorrichtung zum Bewegen des Prüfkörpers empfängt und das Speichern der Referenzdaten in der Speichereinrichtung ermöglicht. Die Integration der Speichereinrichtung im Kraftfahrzeug ermöglicht das Aufsammeln der Situationsdaten und der Referenzdaten in derselben Speichereinrichtung, ohne dass beide Datensätze drahtlos übertragen werden müssen. Es müssen lediglich die Referenzdaten an das Kraftfahrzeug übertragen werden, während die Situationsdaten bereits im Kraftfahrzeug vorhanden sind. Es ist somit vermieden, dass die Situationsdaten bei einer drahtlosen Datenübertragung fehlerhaft übermittelt werden.

In einer alternativen Ausführungsform ist die Speichereinrichtung auch in einer von dem Kraftfahrzeug getrennten Recheneinrichtung integriert, die z. B. in einem stationären Kontrollturm auf einem Versuchsfeld bereitgestellt ist. Dann werden sowohl Signale mit den Referenzdaten als auch Signale mit den Situationsdaten drahtlos an die Recheneinrichtung gesandt. Diese Ausführungsform hat den Vorteil, dass eine einzige Speichereinrichtung für eine Mehrzahl von Kraftfahrzeugen sowie für eine Vielzahl von unterschiedlichen Vorrichtungen zum Bewegen von Prüfkörpern bereitgestellt werden kann; sie kann einmal zur Verfügung gestellt und für eine Vielzahl von Versuchsabläufen genutzt werden. Ein weiterer Vorteil dieser Ausführungsform besteht darin, dass die Recheneinrichtung gleichzeitig auch die Bewegung des Prüfkörpers und/oder die des Kraftfahrzeugs z.B. unter Ausgabe entsprechender Steuersignale steuern kann. Dann koordiniert die Recheneinrichtung die Prüfabläufe von einer zentralen unabhängigen Stelle und sammelt sowohl die Situationsdaten als auch die Referenzdaten, die jederzeit ausgewertet werden können.

In einer alternativen Ausführungsform ist die Speichereinrichtung auch in der Vorrichtung zum Bewegen des Prüfkörpers integriert, nämlich beispielsweise in der Steuereinrichtung oder in einer separaten Recheneinrichtung.

Bei den auf den Zustand des Prüfkörpers bezogenen Referenzdaten handelt es sich insbesondere um Daten mit Informationen über die Position des Prüfkörpers und/oder seine Bewegungsgeschwindigkeit und/oder über seine Bewegungsrichtung. Die Referenzdaten können beispielsweise mithilfe eines an einem Bauteil der Vorrichtung zum Bewegen des Prüfkörpers oder auch am Prüfkörper selbst angebrachten Positionserfassungsgeräts gewonnen werden. Ein solches Positionserfassungsgerät kann z.B. ein D-GPS-Empfänger ("Differential Global Positioning System"), ein Ortsfunk-Gerät oder dergleichen sein. Ist die Vorrichtung zum Bewegen des Prüfkörpers als eine Schienenvorrichtung - etwa wie im Gegenstand gemäß Druckschrift DE 10 2007 035 474 A1 - bereitgestellt, so kann auch ein Wegsensor zum Messen eines durch den Prüfkörper zurückgelegten Wegs eingesetzt werden. Mit einem solchen Wegsensor kann die Position des Prüfkörpers dann genau ermittelt werden, wenn das Positionserfassungsgerät an einem Bauteil der Vorrichtung angebracht ist, das mit dem Prüfkörper nicht gekoppelt ist und sich mit ihm somit nicht bewegt. Im Allgemeinen können die Referenzdaten entweder die absolute Position des Prüfkörpers oder seine relative Position bezüglich des Kraftfahrzeugs enthalten. Zum Berechnen der relativen Position wird zusätzlich die Information über die absolute Position des Kraftfahrzeugs benötigt. Bei der Ausführungsform, in welcher die Speichereinrichtung in das Kraftfahrzeug integriert ist, können die Referenzdaten lediglich die absolute Position des Prüfkörpers umfassen. Da die jeweils augenblickliche Position des Kraftfahrzeugs in selbigem bekannt ist, kann aus der absoluten Position des Prüfkörpers seine relative Position bezüglich des Kraftfahrzeugs berechnet werden. Ist die Speichereinrichtung in einer von dem Kraftfahrzeug getrennten Recheneinrichtung integriert, so können die Referenzdaten die absolute Position des Prüfkörpers beinhalten. Dann berechnet die Recheneinrichtung die relative Position des Prüfkörpers bezüglich des Kraftfahrzeugs, dies abhängig von der absoluten Position des Kraftfahrzeugs. Alternativ können die Referenzdaten bei dieser Ausführungsform direkt die relative Position des Prüfkörpers bezüglich des Kraftfahrzeugs umfassen. Dies setzt voraus, dass die Vorrichtung zum Bewegen des Prüfkörpers die jeweils augenblickliche absolute Position des Kraftfahrzeugs kennt - z.B. kann diese Position von dem Kraftfahrzeug übermittelt werden - und die relative Position des Prüfkörpers bezüglich des Kraftfahrzeugs berechnet.

Um die Kollisionssituation oder die kollisionsnahe Situation zu schaffen, wird/werden das Kraftfahrzeug und/oder der Prüfkörper gemäß einer Vorgabe bewegt. Als Vorrichtung zum Bewegen des Prüfkörpers kann beispielsweise eine solche Vorrichtung verwendet werden, wie sie in der Druckschrift DE 10 2007 035 474 A1 beschrieben ist. Zum Bewegen des Prüfkörpers kann aber auch eine Tragseilvorrichtung verwendet werden, bei welcher der Prüfkörper mit Hilfe von wenigstens zwei Seilen gehalten und bewegt wird. Eine solche Tragseilvorrichtung kann beispielsweise vier in jeweils einem Eckbereich eines Versuchsfelds montierte Tragmaste aufweisen, denen jeweils eine Auf- und Abwickeleinrichtung zum Auf- und Abwickeln eines Seils zugeordnet ist. Dann ist der Prüfkörper in einem Koppelpunkt der vier Seile aufgehängt und kann durch entsprechendes Auf- bzw. Abwickeln der Seile auf beliebigen Trajektorien bewegt werden. Auch eine einfache Seilzugvorrichtung, mittels welcher der Prüfkörper in die Fahrbahn des Kraftfahrzeugs eingebracht oder von dieser herausbewegt werden kann, kann verwendet werden. Um Störungen von Sensoren des Fahrerassistenzsystems wie auch gegebenenfalls Störungen der drahtlosen Datenübertragung der Referenzdaten und/oder der Situationsdaten zu vermeiden, wird das Verfahren bevorzugt im Freien, das heißt auf einem Versuchsfeld und nicht - wie im Stand der Technik - in einer Halle durchgeführt.

Es kann vorgesehen sein, dass aufgrund der Daten in der Speichereinrichtung Steuersignale an die Steuereinrichtung der Vorrichtung zum Bewegen des Prüfkörpers erzeugt werden. Solche Steuersignale veranlassen dann eine Bewegung des Prüfkörpers gemäß einer Vorgabe. Bei der Ausführungsform, in welcher die Speichereinrichtung im Kraftfahrzeug integriert ist, kann dadurch die Bewegung des Prüfkörpers von dem Kraftfahrzeug aus gesteuert werden. Die Datenkommunikation zwischen dem Kraftfahrzeug und der Steuereinrichtung erfolgt demnach bidirektional, das heißt die Daten können sowohl von der Steuereinrichtung an das Kraftfahrzeug als auch vom Kraftfahrzeug an die Steuereinrichtung gesandt werden. Weil die Steuereinrichtung die Referenzdaten an das Kraftfahrzeug sendet, liegen Informationen über den Zustand des Prüfkörpers im letzteren vor. Das Herbeiführen der Kollisionssituation oder der kollisionsnahen Situation kann demnach von dem Kraftfahrzeug gesteuert werden.

Bei der Ausführungsform, in welcher die Speichereinrichtung in einer vom Kraftfahrzeug separaten Recheneinrichtung integriert ist, können aufgrund der Daten in der Speichereinrichtung ebenfalls Steuersignale an das Fahrzeug gesandt werden. Solche Steuersignale können dann die Bewegung, wie z. B. die Geschwindigkeit und/oder die Bewegungsrichtung des Kraftfahrzeugs steuern. Eine solche Vorgehensweise erfordert einen Roboter, mit dessen Hilfe das Kraftfahrzeug geführt wird. Somit kann sowohl die Bewegung des Prüfkörpers als auch die des Kraftfahrzeugs von einer separaten Recheneinrichtung gesteuert werden. Eine solche Recheneinrichtung kann z. B. stationär auf einem Versuchsfeld montiert werden, insbesondere in einem Kontrollturm o.ä.

Das erfindungsgemäße Kraftfahrzeug umfasst ein Fahrerassistenzsystem, das dazu ausgebildet ist, Situationsdaten zu gewinnen. Das Kraftfahrzeug umfasst einen Empfänger, der Signale mit einen Zustand eines Prüfkörpers beschreibenden Referenzdaten von einer Vorrichtung zum Bewegen von Prüfkörpern empfängt. Außerdem umfasst das erfindungsgemäße Kraftfahrzeug eine Recheneinrichtung, die die Situationsdaten und die Referenzdaten in der selben Speichereinrichtung gleichzeitig auf eine solche Art und Weise abspeichert, dass ein Teil der Referenzdaten einem Teil der Situationsdaten zeitlich zuordenbar ist. Somit werden die Situationsdaten den Referenzdaten nach den jeweiligen Zeitpunkten der Datenerfassung zugeordnet.

Das erfindungsgemäße Kraftfahrzeug ermöglicht einerseits das Bereitstellen der Referenzdaten und der Situationsdaten an einer zentralen Stelle während der Prüfung des Fahrerassistenzsystems, andererseits ermöglicht das erfindungsgemäße Kraftfahrzeug eine gleichzeitige Auswertung der Situationsdaten während eines Prüfablaufs.

Eine solche Auswertung kann beispielsweise so erfolgen, dass die Recheneinrichtung die Situationsdaten mit den Referenzdaten vergleicht und die Situationsdaten auswertet. Diese Auswertung muss also nicht nach der Beendigung eines Prüfablaufs erfolgen, so dass der zeitliche Aufwand auf ein Minimum reduziert wird.

Vorzugsweise ist eine Antenne zum Empfangen der Signale mit den Referenzdaten an den Empfänger angeschlossen. Dann können auch solche Signale mit den Referenzdaten empfangen werden, die drahtlos von der Steuereinrichtung der Vorrichtung zum Bewegen von Prüfkörpern gesandt werden.

Die Recheneinrichtung des Kraftfahrzeugs stellt auch Steuerdaten für die Vorrichtung zum Bewegen von Prüfkörpern und/oder für das Kraftfahrzeug selbst bereit. Bei dieser Ausführungsform ist bevorzugt ein Sender mit der Recheneinrichtung gekoppelt, der zum Senden von Steuersignalen mit den Steuerdaten ausgebildet ist. Das Senden der Steuersignale kann ebenfalls mithilfe einer Antenne oder auch der bereits genannten Antenne erfolgen.

Die Erfindung wird nun anhand einzelner bevorzugter Ausführungsbeispiele sowie unter Bezugnahme auf die Zeichnung näher erläutert, wobei
- Fig. 1: eine schematische Darstellung ist, anhand derer ein Verfahren gemäß einer ersten Ausführungsform der Erfindung erläutert wird; und
- Fig. 2: eine schematische Darstellung ist, anhand derer ein Verfahren gemäß einer zweiten Ausführungsform der Erfindung erläutert wird.

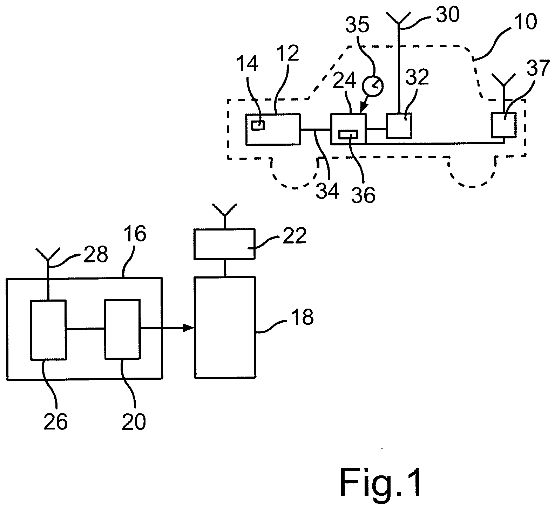

Fig. 1 zeigt in schematischer Darstellung ein Kraftfahrzeug 10 mit einem Fahrerassistenzsystem 12. Das Fahrerassistenzsystem 12 umfasst einen Sensor 14, sei es einen aktiven oder einen passiven Sensor, welcher Situationsdaten über eine Umgebung des Kraftfahrzeugs 10 gewinnt. Aufgrund der Situationsdaten kann das Fahrerassistenzsystem 12 Sicherheitsmaßnahmen im Kraftfahrzeug 10 auslösen, nämlich insbesondere in ein Bremssystem eingreifen, einen Airbag betätigen oder dergleichen. Das Fahrerassistenzsystem 12 muss während einer Phase der Entwicklung des Kraftfahrzeugs 10 auf seine Funktion hin geprüft werden. Zu diesem Zwecke werden Versuchsfahrten durchgeführt, in denen Kollisionssituationen oder kollisionsnahe Situationen mit dem Kraftfahrzeug 10 geschaffen werden.

Eine solche Situation, in welcher eine Kollision des Kraftfahrzeugs 10 bevorsteht oder eintritt, wird mit Hilfe einer Vorrichtung 16 zum Bewegen eines Prüfkörpers 18 geschaffen. Die Vorrichtung 16 kann zum Beispiel eine Schienenvorrichtung, wie sie in der Druckschrift DE 10 2007 035 474 A1 beschrieben ist, oder auch eine beliebige Bewegungsvorrichtung sein, welche das Bewegen des Prüfkörpers 18 ermöglicht. Die Vorrichtung 16 umfasst eine Steuereinrichtung 20, die die Bewegung des Prüfkörpers 18 steuert. Die Steuereinrichtung 20 erfasst auch Referenzdaten, die einen Zustand des Prüfkörpers 18 beschreiben, nämlich Daten über die jeweils augenblickliche Position des Prüfkörpers 18, Daten über seine Bewegungsgeschwindigkeit sowie Daten über seine Bewegungsrichtung. An dem Prüfkörper 18 ist ein D-GPS-Empfänger ("Differential Global Positioning System") 22 angebracht, welcher Informationen über die globale Position des Prüfkörpers 18 gewinnt, sie verarbeitet und an die Steuereinrichtung 20, z. B. über eine Leitung oder auch drahtlos überträgt. Die Steuereinrichtung 20 erhält also Informationen über die jeweils momentane Position des Prüfkörpers 18 und kann daraus weitere Informationen, wie die Bewegungsgeschwindigkeit und die Bewegungsrichtung ableiten. Diese Berechnung kann aber auch im D-GPS-Empfänger 22 stattfinden.

Die Kollisionssituation oder kollisionsnahe Situation wird auf eine solche Art und Weise herbeigeführt, dass der Prüfkörper 18 in eine Fahrbahn des Kraftfahrzeugs eingebracht oder von dieser Fahrbahn kurz vor einem Zusammenstoß mit dem Kraftfahrzeug 10 herausbewegt wird. Während des Herbeiführens dieser Situation nimmt das Fahrerassistenzsystem 12 die Situationsdaten über die Fahrzeugumgebung auf und bewirkt abhängig von den erfassten Informationsdaten bestimmte Vorgänge. Diese vom Fahrerassistenzsystem 12 erfassten Situationsdaten müssen dann geprüft und ausgewertet werden, nämlich mit den Referenzdaten verglichen werden.

Um die Auswertung der Situationsdaten bereits während der Prüfung des Fahrerassistenzsystems 12 zu ermöglichen oder auch zu einem späteren Zeitpunkt zu vereinfachen, werden die Referenzdaten von der Steuereinrichtung 20 an eine im Fahrzeug 10 integrierte Recheneinrichtung 24 übertragen. Die Recheneinrichtung 24 kann auch im Fahrerassistenzsystem 12 integriert sein. Zum Zwecke des Sendens der Referenzdaten ist mit der Steuereinrichtung 20 ein Sender 26 gekoppelt, an welchen eine Antenne 28 angeschlossen ist. Die Steuereinrichtung 20 übermittelt die Referenzdaten an den Sender 26, und der Sender 26 erzeugt Signale, die die Referenzdaten umfassen und über die Antenne 28 abgestrahlt werden. Die Signale mit den Referenzdaten empfängt auf der Seite des Kraftfahrzeugs 10 eine Antenne 30, die an einen Empfänger 32 angeschlossen ist. Aus den empfangenen Signalen extrahiert der Empfänger 32 die Referenzdaten und übermittelt sie an die Recheneinrichtung 24. Die Recheneinrichtung 24 erhält auch die vom Fahrerassistenzsystem 12 gewonnenen Situationsdaten, nämlich beispielsweise über einen Kommunikationsbus 34.

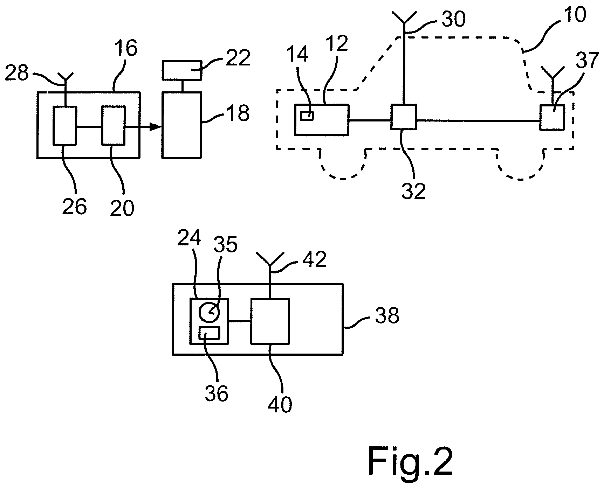

Die Recheneinrichtung 24 umfasst einen Speicher 36, in welchem sie gleichzeitig die Referenzdaten sowie die Situationsdaten abspeichert. Dies erfolgt auf eine solche Art und Weise, dass die Referenzdaten den Situationsdaten zeitlich zugeordnet werden können, d. h. die Sortierung der Referenzdaten und der Situationsdaten wird im Speicher 36 nach den jeweiligen Zeitpunkten der Datenerfassung vorgenommen. Dies wird durch eine im Kraftfahrzeug 10 vorhandene Uhr 35 ermöglicht, die ein Taktsignal (clock) an die Recheneinrichtung 24 übermittelt. Die Uhr 35 kann auch in die Recheneinrichtung 24 selbst integriert sein (siehe das in Fig. 2 dargestellte zweite Beispiel). Die Recheneinrichtung 24 erfasst die Situationsdaten und die Referenzdaten und ordnet jeweils ein Teil - z.B. ein Bit oder ein digitales Wort - der Situationsdaten und der Referenzdaten einem bestimmten Zeitpunkt oder einem bestimmten Zeitintervall zu. Ein Beispiel für eine solche Zuordnung ist in der nachfolgenden Tabelle dargestellt:

| Zeitpunkt oder -intervall | Situationsdaten | Referenzdaten |
|---|---|---|
| 1. | 101 | 100 |
| 2. | 011 | 111 |
| 3. | 111 | 101 |
| 4. | 000 | 110 |
| 5. | 010 | 011 |

Also erfasst die Recheneinrichtung 24 die jeweiligen Zeitpunkte, zu welchen die Referenzdaten und die Situationsdaten ankommen. Weil die Referenzdaten drahtlos übertragen werden, berücksichtigt die Recheneinrichtung 24 auch zusätzlich die Laufzeit der Referenzdaten, d.h. die Zeit zwischen der Gewinnung der Referenzdaten und deren Ankommen in der Recheneinrichtung 24. Diese Laufzeit der Referenzdaten wird bei dem Abspeichern der Referenzdaten in dem Speicher 36 berücksichtigt.

Durch das zeitsynchrone Abspeichern der Situationsdaten und der Referenzdaten wird gewährleistet, dass die Situationsdaten mit den Referenzdaten ohne viel Aufwand verglichen werden können, ohne die zeitliche Zuordnung der jeweiligen Daten später vornehmen zu müssen. Durch eine solche Vorgehensweise kann das Auswerten der Situationsdaten bzw. das Vergleichen selbiger mit den Referenzdaten auch während des Herbeiführens der Kollisionssituation oder der kollisionsnahen Situation erfolgen. Bei der Auswertung der Situationsdaten werden auch Informationen über die jeweils augenblickliche Position des Kraftfahrzeugs 10 berücksichtigt. Diese Informationen werden mit einem D-GPS-Empfänger 37 gewonnen, der im Kraftfahrzeug 10 vorhanden ist. Der D-GPS-Empfänger 37 übermittelt diese Informationen an die Recheneinrichtung 24.

Die Datenübertragung zwischen dem Sender 26 und dem Empfänger 32 erfolgt gemäß einem Kommunikationsstandard der IEEE-802.11-Familie, der auch unter der Bezeichnung "WLAN" bekannt ist. Mit einem solchen Kommunikationsstandard können nicht nur die für den Zweck der Prüfung des Fahrerassistenzsystems 12 erforderlichen Reichweiten gewährleistet werden, sondern auch bereits auf dem Markt vorhandene Geräte genutzt werden.

Die Datenkommunikation zwischen dem Sender 26 und dem Empfänger 32 kann auch bidirektional erfolgen. Dann hat der Sender 26 auch die Funktion eines Empfängers - er wird somit nachfolgend als Sender/Empfänger 26 bezeichnet - und der Empfänger 32 hat auch die Funktion eines Senders - er wird nachfolgend als Sender/Empfänger 32 bezeichnet. Die jeweiligen Antennen 28 und 30 dienen sowohl zum Empfangen als auch zum Senden von Signalen. Die bidirektionale Datenübertragung kann beispielsweise zum Steuern der Bewegung des Prüfkörpers von Seiten des Kraftfahrzeugs 10 genutzt werden. Die Recheneinrichtung 24 erzeugt dann aufgrund der Situationsdaten und der Referenzdaten Steuerdaten, die sie an den Sender/Empfänger 32 übermittelt. Der Sender/Empfänger 33 sendet Signale mit den Steuerdaten über die Antenne 30. Diese Signale werden von dem Sender/Empfänger 26 der Vorrichtung 16 empfangen, die Steuerdaten werden aus den Signalen extrahiert und an die Steuereinrichtung 20 übermittelt. Die Steuereinrichtung 20 steuert dann die Bewegung des Prüfkörpers 18 entsprechend den Steuerdaten.

Gemäß dem in Fig. 2 gezeigten zweiten Beispiel ist die Recheneinrichtung 24 mit dem Speicher 36 außerhalb des Kraftfahrzeugs 10 angeordnet, nämlich in einem Kontrollturm 38, der auf oder neben einem Versuchsfeld aufgebaut ist. Signale mit den Referenzdaten sowie Signale mit den Situationsdaten empfängt dabei ein Sender/Empfänger 40, an welchem eine Antenne 42 angeschlossen ist.

Über den Sender/Empfänger 32 sendet das Kraftfahrzeug 10 also nun sowohl die Situationsdaten vom Fahrerassistenzsystem als auch die Daten über die jeweils momentane Position des Kraftfahrzeugs 10, die mit dem D-GPS-Empfänger 37 erfasst werden.

Die Recheneinrichtung 24 erhält also gleichzeitig die Referenzdaten, die Situationsdaten sowie Daten mit den Informationen über die Position des Kraftfahrzeugs 10. Sie kann demnach die vom Fahrerassistenzsystem 12 aufgenommenen Situationsdaten auch während eines Prüfablaufs, d. h. während des Herbeiführens der Kollisionssituation oder der kollisionsnahen Situation auswerten.

Aufgrund der empfangenen Daten erzeugt die Recheneinrichtung 24 auch Steuerdaten, dies sowohl für die Vorrichtung 16 als auch für das Kraftfahrzeug 10. Diese Steuerdaten werden dann mit Hilfe des Senders/Empfängers 40 gesandt. Die Recheneinrichtung 24 koordiniert also die Prüfabläufe, sie kann sowohl die Bewegung des Prüfers 18 als auch die des Kraftfahrzeugs 10 steuern.

Auch hier erfolgt die Datenübertragung einerseits zwischen dem Sender/Empfänger 40 und dem Sender/Empfänger 26 und andererseits zwischen dem Sender/Empfänger 40 und dem Sender/Empfänger 34 gemäß einem Kommunikationsstandard der IEEE-802.11-Familie.

Gemäß einem weiteren Beispiel kann auch vorgesehen sein, dass die Recheneinrichtung 24 der Vorrichtung 16 zugeordnet ist, z. B. in der Steuereinrichtung 20 integriert ist.

Insgesamt wird ein Verfahren geschaffen, mit welchem die Funktion von Fahrerassistenzsystemen 12 von Kraftfahrzeugen 10 ohne viel Aufwand geprüft werden können. Durch das gleichzeitige Abspeichern von Situationsdaten des Fahrerassistenzsystems 12 sowie von den Zustand des Prüfkörpers 18 beschreibenden Referenzdaten in einem Speicher 26 kann der Aufwand bei der Auswertung der Situationsdaten, insbesondere bezüglich der zeitlichen Zuordnung der Referenzdaten zu den Situationsdaten, also bezüglich der zeitlichen Synchronisierung der Daten, im Vergleich zum Stand der Technik deutlich reduziert werden.

## Patentansprüche

1. Verfahren zum Prüfen der Funktion eines Fahrerassistenzsystems (12) eines Kraftfahrzeugs (10) in einer Kollisionssituation oder einer kollisionsnahen Situation, mit den Schritten:
- Bereitstellen eines Prüfkörpers (18) sowie einer Vorrichtung (16) zum Bewegen des Prüfkörpers (18), wobei einen Zustand des Prüfkörpers (18) beschreibende Referenzdaten durch eine Steuereinrichtung (20) dieser Vorrichtung (16) erfasst werden,
- Herbeiführen einer Situation, in der eine Kollision des Kraftfahrzeugs (10) und des Prüfkörpers (18) bevorsteht oder eintritt,
- während des Herbeiführens Gewinnen von Situationsdaten durch das Fahrerassistenzsystem (12) und gleichzeitiges Bereitstellen der Referenzdaten und der Situationsdaten in derselben Speichereinrichtung (36),
**dadurch gekennzeichnet, dass**
das Herbeiführen der Situation beinhaltet, dass das Kraftfahrzeug (10) oder der Prüfkörper (18) gemäß einer Vorgabe bewegt wird,
wobei die Referenzdaten den Situationsdaten zeitlich so zugeordnet werden, dass eine Sortierung der Referenzdaten und der Situationsdaten in der Speichereinrichtung (36) nach den jeweiligen Zeitpunkten der Datenerfassung vorgenommen wird.

2. Verfahren nach Anspruch 1, bei welchem das Bereitstellen der Referenzdaten und der Situationsdaten auf eine solche Art und Weise erfolgt, dass zumindest jeweils ein Teil der Referenzdaten jeweils zumindest einem Teil der Situationsdaten zeitlich zuordenbar ist.

3. Verfahren nach Anspruch 1 oder 2, bei welchem während des Herbeiführens der Situation ein Vergleichen der Situationsdaten mit den Referenzdaten und ein Auswerten der Situationsdaten erfolgt.

4. Verfahren nach einem der vorhergehenden Ansprüche, bei welchem die Referenzdaten und/oder die Situationsdaten drahtlos, insbesondere gemäß einem Kommunikationsstandard der IEEE-802.11-Familie, übertragen werden.

5. Verfahren nach Anspruch 4, bei welchem die Speichereinrichtung (36) in das Kraftfahrzeug (10) integriert ist, so dass die Referenzdaten von der Steuereinrichtung (20) an das Kraftfahrzeug (10) gesandt werden.

6. Verfahren nach Anspruch 4, bei welchem die Speichereinrichtung (36) in eine von dem Kraftfahrzeug (10) getrennte Recheneinrichtung (24) integriert ist, so dass die Referenzdaten und die Situationsdaten an die Recheneinrichtung (24) gesandt werden.

7. Verfahren nach einem der vorhergehenden Ansprüche, bei welchem die auf den Zustand des Prüfkörpers (18) bezogenen Referenzdaten Daten über die Position des Prüfkörpers (18) und/oder über seine Bewegungsgeschwindigkeit und/oder über seine Bewegungsrichtung umfassen.

8. Verfahren nach einem der vorhergehenden Ansprüche, bei welchem aufgrund der Daten in der Speichereinrichtung (36) Steuersignale an die Steuereinrichtung (20) erzeugt werden, durch die ein Bewegtwerden des Prüfkörpers (18) gemäß einer Vorgabe veranlasst wird.

9. Kraftfahrzeug (10) mit
- einem Fahrerassistenzsystem (12), das dazu ausgebildet ist, Situationsdaten zu gewinnen,
- einem Empfänger (32), der dazu ausgebildet ist, Signale mit einen Zustand eines Prüfkörpers (18) beschreibenden Referenzdaten von einer Vorrichtung (16) zum Bewegen von Prüfkörpern (18) zu empfangen, und
- einer Recheneinrichtung (24), die dazu ausgelegt ist, die Situationsdaten und die Referenzdaten in derselben Speichereinrichtung (36) gleichzeitig derart abzuspeichern, dass ein Teil der Referenzdaten einem Teil der Situationsdaten zeitlich zuordenbar ist,
**dadurch gekennzeichnet, dass**
die Recheneinrichtung (24) dazu ausgelegt ist, Steuerdaten für die Vorrichtung (16) zum Bewegen von Prüfkörpern (18) oder für das Kraftfahrzeug (10) bereitzustellen,
wobei die Recheneinrichtung (24) weiterhin ausgelegt ist die Referenzdaten den Situationsdaten zeitlich zuzuordnen, indem eine Sortierung der Referenzdaten und der Situationsdaten in der Speichereinrichtung (36) nach den jeweiligen Zeitpunkten der Datenerfassung vorgenommen wird.

10. Kraftfahrzeug (10) nach Anspruch 9, bei welchem die Recheneinrichtung (24) dazu ausgelegt ist, die Situationsdaten mit den Referenzdaten zu vergleichen und die Situationsdaten auszuwerten.

11. Kraftfahrzeug (10) nach Anspruch 9 oder 10, bei welchem eine Antenne (30) zum Empfangen der Signale mit den Referenzdaten an den Empfänger (32) angeschlossen ist.

12. Kraftfahrzeug (10) nach einem der Ansprüche 9 bis 11, bei welchem die Recheneinrichtung (24) dazu ausgelegt ist, Steuerdaten für die Vorrichtung (16) zum Bewegen von Prüfkörpern (18) und für das Kraftfahrzeug (10) bereitzustellen, wobei ein Sender (32) mit der Recheneinrichtung (24) gekoppelt ist, der zum Senden von Signalen mit den Steuerdaten ausgebildet ist.

## Claims

1. Method for testing the operation of a driver assistance system (12) of a motor vehicle (10) in a collision situation or a near-collision situation, comprising the steps:
- providing a test specimen (18) and also a device (16) for moving the test specimen (18), whereby reference data describing a state of the test specimen (18) are acquired by a control apparatus (20) of this device (16),
- triggering a situation in which a collision of the motor vehicle (10) and of the test specimen (18) is imminent or is occurring,
- the driver assistance system (12) obtaining situation data during the triggering and simultaneously providing the reference data and the situation data in the same storage apparatus (36),
**characterised in that**
the triggering of the situation includes moving the motor vehicle (10) or the test specimen (18) in accordance with a specification,
whereby the reference data are associated chronologically with the situation data so that sorting of the reference data and the situation data takes place in the storage apparatus (36) according to the respective times of the data acquisition.

2. Method according to claim 1, in which the provision of the reference data and the situation data takes place in such a way that in each case at least a portion of the reference data can be assigned respectively to at least a portion of the situation data.

3. Method according to claim 1 or 2, in which during the triggering of the situation a comparison of the situation data with the reference data and an evaluation of the situation data takes place.

4. Method according to any of the preceding claims, in which the reference data and/or the situation data are transmitted wirelessly, in particular according to a communication standard of the IEEE-802.11 family.

5. Method according to claim 4, in which the storage apparatus (36) is integrated into the motor vehicle (10), so that the reference data are transmitted from the control apparatus (20) to the motor vehicle (10).

6. Method according to claim 4, in which the storage apparatus (36) is integrated into a computing apparatus (24) separate from the motor vehicle (10), so that the reference data and the situation data are transmitted to the computing apparatus (24).

7. Method according to any of the preceding claims, in which the reference data relating to the state of the test specimen (18) comprise data on the position of the test specimen (18) and/or the speed of movement thereof and/or the direction of movement thereof.

8. Method according to any of the preceding claims, in which, based on the data in the storage apparatus (36), control signals to the control apparatus (20) are generated, which causes the test specimen (18) to be moved according to a specification.

9. Motor vehicle (10) comprising
- a driver assistance system (12) which is designed to obtain situation data,
- a receiver (32) which is designed to receive signals with reference data describing a state of a test specimen (18) from a device (16) for moving test specimens (18), and
- a computing apparatus (24) which is configured to store the situation data and the reference data in the same storage apparatus (36) simultaneously in such a way that a portion of the reference data can be assigned chronologically to a portion of the situation data,
**characterised in that**
the computing apparatus (24) is configured to provide control data for the device (16) for moving test specimens (18) or for the motor vehicle (10),
whereby furthermore the computing apparatus (24) is configured to assign reference data chronologically to the situation data by sorting the reference data and the situation data in the storage apparatus (36) according to the respective times of the data acquisition.

10. Motor vehicle (10) according to claim 9, in which the computing apparatus (24) is configured to compare the situation data with the reference data and to evaluate the situation data.

11. Motor vehicle (10) according to claim 9 or 10, in which an antenna (30) for receiving the signals with the reference data is connected to the receiver (32).

12. Motor vehicle (10) according to any of claims 9 to 11, in which the computing apparatus (24) is configured to provide control data for the device (16) for moving test specimens (18) and for the motor vehicle (10), whereby a transmitter (32) which is designed to transmit signals with the control data is coupled to the computing apparatus (24).

## Revendications

1. Procédé pour contrôler le fonctionnement d'un système d'assistance au conducteur (12) d'un véhicule automobile (10) dans une situation de collision ou une situation proche d'une collision, avec les étapes :
- de préparation d'un corps d'essai (18) ainsi que d'un dispositif (16) pour mouvoir le corps d'essai (18), selon lequel des données de référence décrivant un état du corps d'essai (18) sont acquises par un appareil de commande (20) de ce dispositif (16),
- de mise en place d'une situation dans laquelle une collision du véhicule automobile (10) et du corps d'essai (18) est imminente ou se produit,
- pendant la mise en place, d'obtention de données de situation par le système d'assistance au conducteur (12) et de préparation simultanée des données de référence et des données de situation dans le même dispositif de stockage (36),
**caractérisé en ce que**
la mise en place de la situation implique que le véhicule automobile (10) ou le corps d'essai (18) soit déplacé conformément à une spécification, selon lequel les données de référence sont temporellement associées aux données de situation de façon qu'un tri des données de référence et des données de situation dans le dispositif de stockage (36) soit effectué selon les moments respectifs de l'acquisition de données.

2. Procédé selon la revendication 1, selon lequel la préparation des données de référence et des données de situation est effectuée d'une telle façon qu'au moins respectivement une partie des données de référence soit temporellement associable à respectivement au moins une partie des données de situation.

3. Procédé selon la revendication 1 ou 2, selon lequel pendant la mise en place de la situation, une comparaison des données de situation avec les données de référence et une évaluation des données de situation sont effectuées.

4. Procédé selon l'une des revendications précédentes, selon lequel les données de référence et/ou les données de situation sont transmises sans fil, en particulier conformément à un standard de communication de la famille IEEE-802.11.

5. Procédé selon la revendication 4, selon lequel le dispositif de stockage (36) dans le véhicule automobile (10) est intégré de façon que les données de référence soient envoyées par l'appareil de commande (20) au véhicule automobile (10).

6. Procédé selon la revendication 4, selon lequel le dispositif de stockage (36) est intégré dans un dispositif de calcul (24) séparé du véhicule automobile (10) de façon que les données de référence et les données de situation soient envoyées au dispositif de calcul (24).

7. Procédé selon l'une des revendications précédentes, selon lequel les données de référence relatives à l'état du corps d'essai (18) comprennent des données concernant la position du corps d'essai (18) et/ou concernant sa vitesse de mouvement et/ou concernant sa direction de mouvement.

8. Procédé selon l'une des revendications précédentes, selon lequel sur la base des données dans le dispositif de stockage (36), des signaux de commande sont générés au niveau de l'appareil de commande (20), par lesquels une mise en mouvement du corps d'essai (18) est ordonnée conformément à une spécification.

9. Véhicule automobile (10) avec
- un système d'assistance au conducteur (12) qui est configuré pour obtenir des données de situation,
- un récepteur (32) qui est configuré pour recevoir des signaux avec des données de référence d'un dispositif (16), décrivant un état d'un corps d'essai (18), pour mouvoir des corps d'essai (18), et
- un dispositif de calcul (24) qui est configuré pour mémoriser simultanément les données de situation et les données de référence dans le même dispositif de stockage (36) de telle façon qu'une partie des données de référence soit temporellement associable à une partie des données de situation.
**caractérisé en ce que**
le dispositif de calcul (24) est configuré pour préparer des données de commande pour le dispositif (16) en vue de mouvoir des corps d'essai (18) ou pour le véhicule automobile (10),
selon lequel le dispositif de calcul (24) est en outre configuré pour associer temporellement les données de référence aux données de situation, tandis qu'un tri des données de référence et des données de situation est effectué dans le dispositif de stockage (36) selon les moments respectifs de l'acquisition de données.

10. Véhicule automobile (10) selon la revendication 9, selon lequel le dispositif de calcul (24) est configuré pour comparer les données de situation avec les données de référence et évaluer les données de situation.

11. Véhicule automobile (10) selon la revendication 9 ou 10, selon lequel une antenne (30) est raccordée pour recevoir les signaux avec les données de référence au niveau du récepteur (32).

12. Véhicule automobile (10) selon l'une des revendications 9 à 11, selon lequel le dispositif de calcul (24) est configuré pour préparer des données de commande pour le dispositif (16) en vue de mouvoir des corps d'essai (18) et pour le véhicule automobile (10), selon lequel un émetteur (32) est couplé au dispositif de calcul (24), qui est configuré pour envoyer des signaux avec les données de commande.
